# EUROPEAN PATENT SPECIFICATION

(11) **EP 0 457 523 B1**
(45) Date of publication and mention of the grant of the patent: **20.08.1997**
(21) Application number: 91304260.2
(22) Date of filing: 13.05.1991
(51) Int. Cl.: H01S 3/094, H01S 3/17, H01S 3/082, H01S 3/23

(54) **Apparatus for pumping of a weakly absorbing lasant material**
Vorrichtung zum Pumpen eines schwach absorbierenden Lasermediums
Dispositif de pompage d'un milieu laser faiblement absorbant

(30) Priority: 16.05.1990 US 523991; 11.07.1990 US 551569
(43) Date of publication of application: 21.11.1991
(73) Proprietor: ATX TELECOM SYSTEMS, INC., Naperville, Illinois 60563 (US)
(72) Inventor: Clark, John Hamilton, Wheaton, Illinois 60187 (US); Anthon, Douglas William, Wheaton, Illinois 60187 (US); Johnson, Leo Francis, Bedminster, New Jersey 07921 (US)
(74) Representative: Boon, Graham Anthony

(56) References cited:
- DE-A- 1 514 548
- US-A- 4 173 001
- PATENT ABSTRACTS OF JAPAN vol. 13, no. 220 (E-762)(3568) 23 May 1989 & JP-A-1 031 485
- LEOS 90 vol. 2, 4 November 1990, BOSTON pages 519 - 520; D.W.ANTHON ET AL.: 'ERBIUM AND HOLMIUM LASERS PUMPED WITH Nd:YAG'

## Description

### TECHNICAL FIELD

This invention relates to the general subject of solid-state lasers and, in particular, to a laser system wherein a weakly absorbing material is pumped by another laser.

### BACKGROUND OF THE INVENTION

When one solid-state laser is used to pump another solid-state laser, it is important, for efficient operation, that essentially all the pump photons be absorbed by the second laser material. This is conventionally achieved by making the laser material long enough that more than 90% of the light at the pump wavelength is absorbed in a single pass through the material. This is not always practical with weakly absorbing materials (i.e., those materials where the absorption is only a few percent per centimeter). Sufficiently large pieces of the laser material may be unobtainable or the losses introduced by the long laser rod may be unacceptable. Simple techniques for increasing the material absorption (e.g., increasing the active ion concentration) are usually not feasible, since they usually have unacceptable physical consequences, such as reductions in the excited state lifetime. Thus, alternative techniques for efficiently pumping these weakly absorbing materials are desirable.

The potential medical uses for 3 µm lasers has spurred a search for efficient high power solid-state sources. For example, holmium laser operation has been demonstrated using flashlamp pumping in a number of different hosts. The lowest thresholds have been observed using holmium doped yttrium aluminum perovskite (YAlO₃) or Ho:YAP. Emission in Ho:YAP has been reported at 2.92 µm and 3.02 µm on the ⁵I₆ → ⁵I₇ transition.

Intracavity laser pumping, using the 1.08 µm line of a Nd:YAP laser to pump a Ho:YAP rod has been reported. S. R. Bowman, W. S. Rabinovich, A. P. Bowman and B. J. Feldman, "Laser Pumped 3 µm Ho:YAlO₃ Laser," Annual Meeting of Optical Society of America, Session TU04, October 16, 1989. Specifically, a Ho:YAP rod was placed inside the cavity of a flashlamp pumped Nd:YAP laser whose cavity losses, aside from the rod, were low. Since the rod was the dominant loss in the Nd:YAP cavity, it absorbed most of the pump light after many passes. A separate cavity, in and oriented at a slight angle from the axis of the 1.08 µm Nd:YAP laser cavity, was used to contain the Ho:YAP rod. Emission was observed at 2.92 µm as well as at a new line at 2.85 µm. The 2.85 µm line was extremely sensitive to atmospheric water absorption and ran well only when the laser was purged with dry nitrogen. In a non-optimized cavity, slope efficiencies of about 4% were observed relative to the 1.08 µm pump and a maximum output energy of 8 mJ was observed.

The physical size of the Bowman et al. system is relatively large (e.g., 6.3 mm by 75 mm holmium doped laser rod size). High power densities were required and, because of the geometry, the Ho:YAP host material was not used efficiently. The thresholds were also relatively high.

Erbium is a material of practical interest since it can be used to generate optical radiation at 1.54 µm which is well into the "eye safe" region. An Yb,Er:glass laser, pumped by a flash lamp, has an energy efficiency in the range of 0.3 to 0.5 percent. By contrast, energy conversion efficiencies of erbium pumped by ytterbium, under optimum conditions, have been predicted to be in the range of 40 to 50 percent. Snitzer & Woodcock, "Applied Physics Letters," Vol. 6, page 45 (1965). Glasses sensitized with Yb and Er and pumped by a Nd laser near 1060 nm have been studied by Gapontsev et al. and good efficiencies have been observed. Optics Comm. 46 (1983) 226. Pumping of Yb using a 860 nm diode in a fiber laser has been studied by W. L. Barnes et al. "Er³⁺ - Yb³⁺ and Er³⁺ Doped Fiber Lasers", Journal of Lightwave Tech., Vol. 7, No. 10, Oct. 1989 at page 1461.

A barium-alumo-metaphosphate glass, activated with 1.5 x 10²¹ cm⁻³ Yb³⁺ ions and 2.5 x 10¹⁹ cm⁻³ Er³⁺ ions has also been studied. "Effective 1.054-1.54 µ Stimulated Emission Conversion", V. P. Gapontsev et al., JETP Letters (1973) 18, p. 251-253. In that study a generally rectangular active Yb³⁺ - Er³⁺ element was used. It had a cross section of 10 mm by 14 mm and a length of 70 mm with two opposite faces inclined at 45 degrees. It was placed in a resonator comprising two active elements of LGS-40 phosphate glass in the form of generally rectangular plates which had a 10 mm by 32 mm cross section, a length of 280 mm and faces cut at the Brewster angle. The two phosphate glass elements were symmetrically arranged relative to the Yb³⁺ - Er³⁺ element.

It would be desirable to use laser materials which are less strongly absorbing and/or much thinner than those used in a conventional extracavity system. If efficient pumping could be achieved in an intracavity geometry, many potentially valuable materials would become available for use and many of the problems associated with physically large systems would be reduced. Moreover, it would be possible to exploit the low power benefits of laser diodes.

### Summary of the Invention

One object of the present invention is to provide a novel laser apparatus.

Another object of the invention is to provide a compact, energy efficient laser apparatus which is characterized by a low threshold for excitation.

Still another object of the invention is to provide an intracavity laser apparatus comprising two lasant materials wherein the power absorbed by the second material is comparable to the optimum output coupling of the laser comprising the first lasant material.

Yet another object of the invention is to provide a diode pumped Nd:YAG laser which pumps a Yb sensitized Er:glass to produce 1.55 µm optical radiation using as few components as possible and using simple geometry.

In accordance with a first aspect of the present invention there is provided a diode-pumped solid-state laser apparatus having the features set out in claim 1. In accordance with a second aspect of the invention there is provided a diode-pumped solid-state laser apparatus having the features set out in claim 2.

In one preferred embodiment of the invention, a submillimeter plate of an Yb,Er:phosphate glass is pumped by a Nd:YAG laser source which is pumped by a laser diode operating at about 800 nm. The plate is located to receive on one side (i.e., the input side) the output of the Nd:YAG laser and is coated on the opposite side (i.e., the side farthest from the Nd:YAG laser or the output side) for high reflection at the lasant wavelength of the Nd:YAG laser (e.g., about 1060 nm). The input side is also coated for high reflection at about 1.5 microns. Thus, the plate is located in the laser cavity of the Nd:YAG and in its own laser cavity.

The practice of intracavity pumping in accordance with the present invention has great potential as a means for expanding the number of laser systems which can be used with laser diode pumping. It also makes it reasonable to consider the use of such difficult systems as three level lasers or up-conversion lasers. Those skilled in the art will readily appreciate the many desirable and commercially important features of such a laser.

Numerous other advantages and features of the present invention will become readily apparent from the following detailed description of the invention, the embodiments described therein, from the claims, and from the accompanying drawings.

### Brief Description of the Drawings

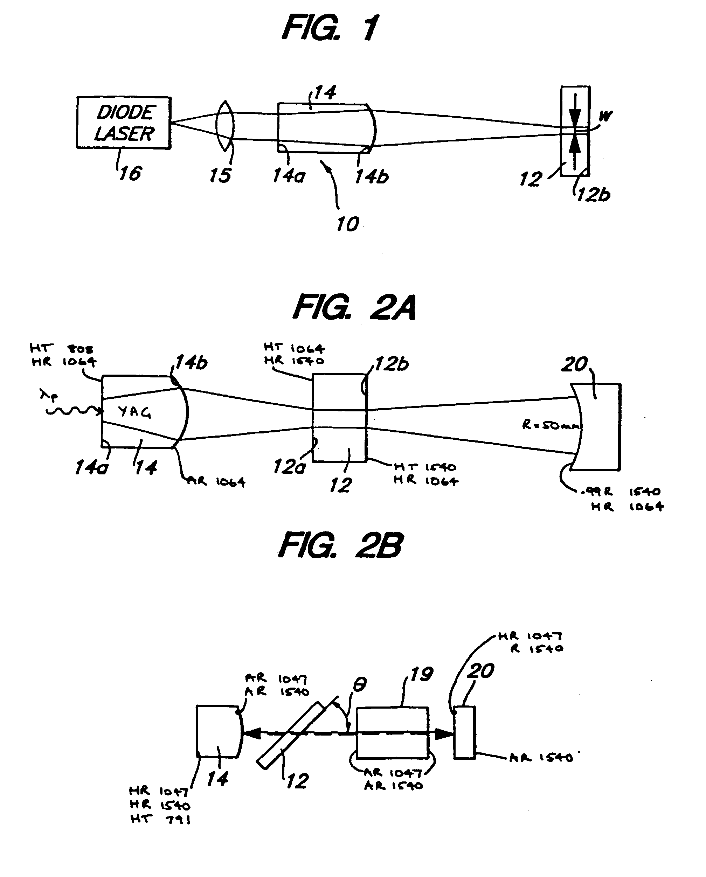

FIG. 1 is a schematic diagram of one embodiment of the present invention;
FIG's. 2A and 2B are schematic diagrams of additional embodiments of the present invention.

### DETAILED DESCRIPTION

While this invention is susceptible of embodiment In many different forms, there is shown in the drawings and will herein be described in detail several specific embodiments of the invention. It should be understood, however, that the present disclosure is to be considered an exemplification of the principles of the invention and is not intended to limit the invention to specific embodiments illustrated.

The use of flashlamps, light-emitting diodes (as used herein, this term includes superluminescent diodes and superluminescent diode arrays) and laser diodes (as used herein, this term includes laser diode arrays) to optically pump or excite a solid lasant material is well-known. Conventional light-emitting diodes and laser diodes are now available which, as a function of composition, produce output radiation having a wavelength over the range from about 630 nm to about 1600 nm. Any such device, which produces optical pumping radiation of a wavelength effective to pump a lasant material, can be used in the practice of this invention. For example, the wavelength of the output radiation from a GaInP based device can be varied from about 630 to about 700 nm by variation of the device's composition. Similarly, the wavelength of the output radiation from a GaAlAs based device can be varied from about 750 nm to about 900 nm by variation of the device's composition. InGaAlP based devices can be used to provide radiation in the wavelength range from about 1000 to about 1600 nm using similar methods.

In accordance with the present invention an apparatus is disclosed for using one solid state laser (i.e., the first laser or the pumping laser) to efficiently pump a second solid state lasant material in a configuration where the second solid state lasant material is located inside the cavity of the first laser. In this arrangement, the pumped laser power, which is absorbed by the lasant material of the second laser, constitutes the output coupling of the pumping laser; preferably, the pumped laser power should be set equal to the optimum output coupling of the pumping laser. For a first laser comprising a diode-pumped Nd:YAG laser, for example, the optimum output coupling is typically a few percent. This corresponds to an absorption in the second lasant material which is much weaker than that which is conventional (i.e., where it is desirable to have absorptions in the second solid state lasant material of 90 percent or more).

In particular, a second laser, using a lasant material which has absorptions near the Neodymium (Nd) laser transitions at about 946 nm, 1064 nm and 1320 nm, can be efficiently pumped by the first laser in accordance with the principles of the present invention. Such lasant materials include a variety of Ytterbium (Yb) sensitized materials which lase in the visible and infrared, as well as Erbium (Er), Holmium (Ho) and Thulium (Tm) containing materials. In the case where the pumped absorption is relatively strong (e.g., Yb at 946 nm), the use of very thin lasant materials for the second laser is practical. This corresponds to extremely high excitation densities which can be very beneficial in cases such as three-level lasers or up-conversion lasers, where a high excitation density is necessary for efficient operation. In addition, the pumping is exceptionally uniform, since the intensity of the pumping beam is almost unchanged throughout the second lasant material.

The second lasant material can be made to lase in a second cavity which can either be: (1) defined in part by the optics used for the pumping laser; or (2) in a separate physical structure. The second case is more general, but requires some method for separating the two wavelengths and necessitates the alignment of two cavities. The first case results in some very significant reductions in the complexity of the system, but requires that the two laser materials be spectroscopically compatible.

### INTRACAVITY PUMPING

The technique of intracavity pumping, that is the subject of the present invention, is best illustrated by example. FIG. 1 shows a laser apparatus 10 comprising a Yb sensitized Er glass lasant material (alternatively referred to as the second lasant material or the glass) 12 which is pumped by radiation produced by another lasant material (alternatively referred to as the first lasant material or first laser) 14 (e.g., Nd:YLiF₄ or Nd:YLF) which is, in turn, optically pumped by a laser diode source 16 through optics or imaging means 15.

Laser diode means 16 can comprise one or more light-emitting diodes or laser diodes.

A highly suitable laser diode source 16 comprises a gallium aluminum arsenide (GaAlAs) laser diode array, emitting light having a wavelength of about 808 nm, which is attached to a heat sink. The heat sink can be passive in character; however, the heat sink can also comprise a thermoelectric cooler to help maintain the laser diode array at a constant temperature and thereby ensure optimal operation of the laser diode array at a constant wavelength.

It will be appreciated that, during operation, the laser diode source 16 is attached to a suitable power supply. For simplicity, electrical leads from laser diode array which are directed to a power supply and other conventional components are not illustrated in the drawings.

The optics 15 serves to focus pumping radiation into the first lasant material 14. This focusing results in a high pumping intensity and an associated high photon conversion efficiency in the two lasant materials 12 and 14. The optics 15 can comprise any conventional means for focusing light, such as a gradient index (GRIN) lens, a ball lens, an aspheric lens or a combination of lenses. Although the use of conventional optics 15 is depicted, it will be appreciated that conventional optics is not an essential element of the invention.

If a laser diode is used as a laser diode source 16, the output face or end of the laser diode source can be placed in a butt-coupled relationship to input surface of the first lasant material 14 without the use of optics 15. As used herein, "butt-coupled" is defined to mean a coupling which is sufficiently close such that a divergent beam of optical pumping radiation, emanating from laser diode source 16, will optically pump a mode volume within the first lasant material 14 with a sufficiently small transverse cross-sectional area so as to support essentially only single transverse mode laser operation (i.e., TEMₒₒ mode operation) in the lasant material.

Suitable first lasant materials 14 include, but are not limited to, solids selected from the group consisting of glassy and crystalline host materials which are doped with an active material and substances wherein the active material is a stoichiometric component of the lasant material. Highly suitable active materials include, but are not limited to, ions of chromium, titanium and the rare earth metals. Highly suitable lasant materials 14 include: neodymium-doped YAG (i.e., yttrium aluminum garnet or Y₃Al₅O₁₂) or Nd:YAG; neodymium-doped YAlO₃ or Nd:YAP; neodymium-doped YLiF₄ (YLF), neodymium-doped Gd₃Ga₅O₁₂ (GGG); neodymium-doped Gd₃Sc₂Ga₃O₁₂ (GSGG) or Gd₃Sc₂Al₃O₁₂ (GSAG), neodymium pentaphosphate, neodymium aluminum borate (NAB) and lithium neodymium tetraphosphate (LNP).

By way of a specific example, neodymium-doped YAG is a highly suitable first lasant material 14 for use in combination with a laser diode source 16 which produces light having a wavelength of about 808 nm. When pumped with light of this wavelength, neodymium-doped YAG can emit light having a wavelength of either about 1064 nm or about 1320 nm.

Simultaneous operation of two lasant materials in the same cavity is facilitated when: (1) the pumping laser material 14 is essentially transparent at the wavelength emitted by the pumped lasant material 12; (2) the absorption in the pumped lasant material 12, at a pumping wavelength, is preferably comparable to or essentially equal to the optimal output coupling of the pumping laser 14; and (3) there are no significant additional losses at either lasing wavelength (e.g., those due to Excited-State Absorption or ESA) in either lasant material.

Specifically, FIG. 1 illustrates a first lasant material 14 in the form of a Nd:YLF laser plano-convex rod which is pumped by a laser diode source 16 at 792 nm through optics 15. One end 14a (i.e., here the left hand end or flat end) of the rod 14 is coated for high reflection (HR) at 1047 nm and at 1540 nm, and for high transmission (HT) at 792 nm; the right hand end or curved end 14b is anti-reflection (AR) coated for 1047 nm and 1540 nm. The radius of the curved end 14b was chosen at 10 mm so that, when combined with a mirrored surface 12b, a laser cavity is formed having a mode with roughly 100 µm radius. The rod length was about 3 mm.

Opposite to the curved end 14b is located the second lasant material 12 in the form of a piece of erbium-ytterbium phosphate glass which is about 0.7 mm in thickness and is AR coated on the adjacent or inner face for 1047 nm and 1540 nm. The glass lasant material 12 could also be uncoated and oriented at the Brewster angle relative to the longitudinal axis of the cavity, or it could be inserted uncoated as a normal incidence etalon; these expedients could avoid the use of some relatively difficult two-color or dichroic coatings.

The thickness and ytterbium concentration of the glass lasant material 12 are chosen so that the round trip absorption at 1047 nm will be roughly 2%. Those skilled in the art will recognize that a loss of this magnitude is what is required to achieve optimum output coupling of a Nd:YLF laser 14. The wavelength dependence of this absorption loss could be enough to force the neodymium laser 14 into operation at a longer wavelength transition. In Nd:YLF, these transitions are near 1071 nm, where there is still appreciable Yb absorption. Some adjustment in the length of the glass may be required to re-optimize the pumping at this wavelength. An optimally output coupled 1047 nm laser 14, pumped with a 200 mW laser diode source 16, typically produces 50 mW; a similar amount of power will be coupled into the glass lasant material 12. Combining this with the erbium lifetime of about 8 msec, a mode radius of 100 µm and with a path length of about 1 mm in a glass lasant material 12, the absorbed energy is about 13 J-cm⁻³ which corresponds to excited 7 x 10¹⁹ atoms-cm⁻³. This corresponds to the total erbium atom density at .7% erbium. This has proven to be enough to ensure population inversion at the .3% to .5% erbium concentrations typically used in such glasses. Reducing the beam diameter can give even larger pumping densities.

The gain in the second lasant material 12 in this situation is relatively small. The round trip gain for a fully inverted population in a 1 mm thickness of .7% erbium glass 12 would only be about 10%. Because of saturation, bleaching and up-conversion effects, the actual achievable inversion will be somewhat lower. A. G. Murzin et al., "Some Features of Laser Excitation of Ytterbium-Erbium Glasses", Sov. J. Quantum Electronics, 15(3), March 1985. Thus, the laser system must be designed to work with gains of only a few percent in the second lasant material 12. The gain can be increased by increasing both the pumping intensity and the number of erbium atoms in the beam. Some adjustment of the erbium concentration and sample length may be required to find the optimum performance for a given pump intensity. However, one of the biggest difficulties in aligning a low gain laser has been eliminated in this design. Because the two lasers share the same cavity and are co-axially aligned, the erbium laser 12 is automatically aligned with its pumping laser 14.

The right hand or exterior surface 12b of the glass 12 forms a mirror or an output coupling means. In a laser system running at both wavelengths, this would simply be a flat mirror coated for high reflectivity at 1047 nm, and for some transmission at about 1540 nm. This will give a continuous wave (CW) output at about 1540 nm.

A highly satisfactory Er glass laser material 12 is a phosphate glass with an Yb concentration of 1.5 x 10²¹ cm⁻³ and an Er concentration of 5.0 x 10¹⁹ cm⁻³. This material works as a three-level laser at the "eye-safe" wavelength of 1540 nm. There is weak absorption in such glasses at the 1047 nm operating wavelength of the Nd:YLF laser 14 due to the long wavelength tail of the Yb absorption. Typical absorption coefficients at Nd laser wavelengths are: 0.070 cm⁻¹ at 1047 nm; and 0.020 cm⁻¹ at 1064 nm. A variety of similar glasses are commercially available and have similar properties.

The apparatus 10 shown in FIG. 1 uses the Yb absorption in the glass 12 as the output coupling of the Nd:YLF laser 14. In the case of a CW Nd:YLF laser pumped with a few hundred milliwatts from a laser diode source 16, those skilled in the art will recognize that the optimum output coupling is comparable to or about 1%. Placing a 0.72 mm thick piece of the above-described Yb,Er:glass 12 in the cavity will result in an absorption equivalent to this coupling. The required thickness of the lasant material or secondary absorber 12 will vary with the details of the glass composition and the choice of Nd laser host 14. With the above-described Yb,Er:glass 12 and with a 1064 nm Nd:YAG laser 14, a piece of phosphate glass, which is about 2.5 mm in thickness, would be required to achieve the same effect. Other glasses with higher Yb concentrations (and shorter absorption depths) exist. Because of the saturation effects discussed below or the wavelength shift of the Nd laser to operate at higher wavelengths (i.e., due to the Yb absorption), the actual optimal glass thickness may vary somewhat.

Because an Er laser is essentially a three level laser, it is not ordinarily considered as a candidate for laser diode pumping. However, the intracavity pumping geometry described here is especially favorable for this type of system because of the efficiency with which a very small volume of active material can be excited. Pulled to near its unstable point, the cavity shown in FIG. 1 will exhibit a 1/e² beam waist "W" of 40 µm in the glass lasant material 12. This gives a pump density of about 80 J/cm³. This is large enough to ensure efficient CW operation.

In actual operation it is expected that some bleaching will occur in the glass so that a steady state absorbance will be achieved. The optimal glass thickness will be that which gives a partially saturated absorbance equal to the optimum output coupling. In practice, this means that some empirical variation of the glass thickness and output coupling may be necessary to achieve optimum CW performance.

FIG. 1 shows a system in which the first laser 14 and the second laser 12 share the same cavity. This works best if the pumping lasant host material of the first laser 14 is transparent at the wavelength at which the second laser operates. This is not automatically true for all Nd-containing first lasant materials 14 at about 1540 nm. In many host materials, the highest energy transitions of the ⁴I_{9/2} → ⁴I_{15/2} absorption band occur near this wavelength. However, several hosts exist which have a short-wavelength absorption edge beyond this wavelength. These include Nd:YVO₄ (1582 nm absorption edge, 1065 nm lasing) and Nd:YLF (1555 nm absorption edge, 1047 nm lasing). Both materials exhibit excellent diode-pumped performance.

The YLF material of the first laser 14 can be replaced by some other laser host material, such as YAG. However, YLF is preferred for two reasons. At 1047 nm, it is the shortest wavelength neodymium lasant material which is now readily available. This optimizes the overlap with the ytterbium absorption and improves the pumping efficiency of the second lasant material 12. YLF is also advantageous because it is transparent at 1.54 µm. In most other laser hosts, such as YAG, the splittings of the ⁴I_{9/2} and ⁴I_{15/2} levels of neodymium are such that there is some absorption at 1.54 µm; this problem is avoided in YLF. Further, there is no appreciable Excited State Absorption (ESA) in neodymium at 1.54 µm.

Finally, it should be noted that the Nd ⁴I_{9/2} → ⁴I_{15/2} absorption bands are extremely weak in most first lasant materials 14. Therefore, even in hosts with detectable absorption at 1540 nm (e.g., Nd:YAG), the absorption losses can be considerably less than the normal scattering losses in the material. This combination of materials is also favorable with respect to ESA as well. The Er ⁴I_{13/2} → ⁴F_{9/2} transition, which could conceivably cause losses at 1047 nm, appears to be at a slightly lower energy than the laser line. Similarly, the Er emission falls between the potentially troublesome Nd ⁴F_{3/2} → ²G_{7/2} and ⁴F_{3/2} → ⁴G_{7/2} excited-state absorptions.

### SEPARATED CAVITIES

Separated cavities are shown in FIG. 2A. The previous discussion is equally applicable with regard to the use of a laser diode source 16 and optics 15, butt-coupling; suitable lasant materials, the sizing of the second lasant material 12 to have it absorb optical radiation in an amount comparable to the optimum output coupling, the absence of significant additional losses at the wavelength at which each material lases, the composition of the second lasant material, and the coatings applied to the ends of the first lasant material 14. When the cavities are separated, the first lasant material 14 need not be essentially transparent relative to the wavelength emitted by the second lasant material 12.

FIG. 2A represents a design for separating the two laser cavities. In FIG. 2A, the left face 14a (i.e., using the orientation of the drawing) of the first lasant material 14 (e.g., Nd:YAG) is coated for HT at 808 nm and HR at 1064 nm and 1540 nm. A laser diode source (e.g., see FIG. 1) is used to pump the left face 14a of first lasant material 14 at 808 nm. The right face 14b was coated for AR at 1064 nm. The second lasant material 12 (e.g., Yb,Er:phosphate glass) is located between the first lasant material 14 and a mirror and output coupler 20. The second lasant material 12, in one prototype system, had thickness of 0.72 mm, and it was formed as an etalon. The side 12a adjacent to the first lasant material 14 was coated for HT at 1064 nm and HR at 1540 nm. The opposite side 12b was coated for HR at 1064 nm and HT at 1540 nm. As such, the left face 14a of the first lasant material 14 and the right side 12b of the second lasant material form a cavity or laser resonator for the first lasant material to lase at 1064 nm. The mirror and output coupler 20 is coated to be HR at 1064 nm and optically transmissive at 1540 nm. As such, the left hand face 12a of the Yb,Er:phosphate glass 12 and the mirror and output coupler 20 form a cavity or laser resonator for the glass to lase at 1540 nm. Output power at 1540 nm was observed to be 30 mW for a laser diode input power of about 500 mW. HR/AR dichroic coatings may be used for the two sides 12a and 12b of the glass to separate the two wavelengths. However, they may be relatively difficult to obtain. Such coatings tend to have unacceptable losses at one of the two frequencies. Nevertheless, the apparatus of FIG. 2A has been reduced to practice using a mirror and output coupler 20 and the coatings identified on the drawing.

The output wavelength was centered at about 1535 nm within an envelope 3 nm wide and having five longitudinal modes. Stable CW operation was obtained. No spiking was observed at optimum cavity design. The thickness of the glass was about 1 mm. Overall cavity length of the prototype device was about four inches. A 0.29 pitch GRIN lens was used for the focusing optics. The curvature of the mirror 20 was 50 mm and the curvature of the emitting face 14b of first lasant material was 20 mm. The second lasant material 12 was Schott LG-750 glass having a doping of about 12.5% Yb and 0.5% Er.

The reflective coating of the mirror 20 may be replaced by a mode selector to produce single frequency operation. This could be, for example, a metal film coating or an etalon reflector. Other mode selectors include an uncoated etalon or a Lyot filter. This is illustrated in FIG. 2B. The erbium glass 12 is then used as a Brewster plate. In addition, a piece of quartz crystal 19, several millimeters thick, is placed in the cavity at about 45 degrees to the Brewster plate axis. The quartz crystal 19 would be cut to be a full-wave plate at both 1047 nm and 1540 nm. If the cavity is short enough (i.e., the modes are far enough apart), this will cause single mode operation at one or both wavelengths. A quartz crystal can also be used as a Brewster plate; this would function as a conventional birefringent filter, like that normally used in a dye laser.

Generally speaking, the technique of FIG. 2A is relatively more difficult to align than is the single cavity technique which is illustrated in FIG. 1. In this case it is necessary to overlap the second laser mode volume with the pumped spot in the second laser host material. However, this is no more difficult than aligning a typical laser-diode pumped solid-state laser, except in systems with large losses in the unpumped regions. In this case, it is important to have good mode overlap between the two lasers.

The technique of intracavity pumping described here is conceptually similar to that of intracavity doubling. In both cases, a relatively weak interaction is efficiently exploited by means of the large optical intensities found in a laser cavity. The intracavity doubling process is complicated by the fact that doubling is a phase-sensitive process. Unusual feedback effects and instabilities can occur because of optical parametric processes which convert the second harmonic radiation back into the fundamental. These processes do not occur in the case of a weakly absorbing material, and the instabilities and noise, which plague intracavity doubled devices, do not occur.

From the foregoing description, it will be observed that numerous variations, alternatives and modifications will be apparent to those skilled in the art. Accordingly, this description is to be construed as illustrative only and is for the purpose of teaching those skilled in the art the manner of carrying out the invention. Various changes may be made, materials substituted and features of the invention may be utilized. For example, up-conversion lasers, which use Yb to sensitize visible emission from Er, Ho and Tm, can be used. The same cavity shown in FIG. 1 can be used for this purpose since Nd:YLF is relatively transparent at both the 551.5 nm Ho transition and at the 670.9 nm Er line. However, it is by no means certain that ground-state or excited-state absorption will not prevent one or more of these lasers from working. In that event, the cavity shown in FIG. 2A may be more useful.

The lasers shown in FIG's. 2A and 2B can be modified in a variety of ways without affecting the pumping geometry. For example, by placing additional elements in the laser cavities, it would be possible to Q-switch, mode-lock, mode select or intracavity-double the lasers shown. It should also be understood that the embodiments previously discussed have different advantages when so modified. For example, the cavity shown in FIG. 2A would not be well-suited to mode-locking because of the etalon effects associated with parallel faces of the laser rod. A Q-switched version of the cavity shown in FIG. 2A has been reduced to practice using a simple chopper-wheel Q-switch which intersected the beam near the surface 12b.

Thus, it will be appreciated that various modifications, alternatives, variations, etc., may be made without departing from the scope of the invention as defined in the appended claims. It is, of course, intended to cover by the appended claims all such modifications involved within the scope of the claims.

## Claims

1. A diode-pumped solid-state laser apparatus (10), comprising:
first laser means including a first optical cavity (14a, 12b) and a first solid-state lasant material (14) located within said first optical cavity, said first laser means producing optical radiation of a primary wavelength along a first optical path when pumped by a diode pumping means (16, 15); and
second laser means including a second optical cavity (14a, 12b) and a second solid-state lasant material (12) located within said second optical cavity, said second laser means producing optical radiation of a secondary wavelength along a second optical path when pumped only by said primary wavelength radiation from said first laser means,
said first and second laser means configured such that said first and second optical paths are collinear at least throughout said second lasant material, such that said first and second optical cavities at least partially overlap, and such that said first lasant material is located within said second optical cavity and said second lasant material is located within said first optical cavity,
wherein said first lasant material is substantially transparent at said secondary wavelength, wherein said second lasant material functions as the output coupler for said first laser means, and wherein said second lasant material has sufficient thickness and composition to absorb said primary wavelength radiation to achieve optimum output coupling for said first laser means, and wherein said first and second lasant materials have sufficiently low losses at said primary and secondary wavelengths due to excited-state absorption to achieve lasing operation in said laser apparatus.

2. A diode-pumped solid-state laser apparatus, comprising:
first laser means including first and second reflectors (14a, 12b) defining a first optical cavity, and a first solid-state lasant material (14) located within said first optical cavity, said first laser means producing optical radiation of a primary wavelength along a first optical path when pumped by a diode pumping means (16, 15); and
second laser means including third and fourth reflectors (12a, 20) defining a second optical cavity, and a second solid-state lasant material (12) located within said second optical cavity, said second laser means producing optical radiation of a secondary wavelength along a second optical path when pumped only by said primary wavelength radiation from said first laser means,
said first and second laser means configured such that said first and second optical paths are collinear at least throughout said second lasant material, such that said first and second optical cavities only partially overlap wherein no reflector of either cavity forms either reflector of the other cavity, and such that said second lasant material is located within said first optical cavity,
wherein said second lasant material functions as the output coupler for said first laser means, wherein said second lasant material has sufficient thickness and composition to absorb said primary wavelength radiation to achieve optimum output coupling for said first laser means, and wherein said second lasant material has sufficiently low losses at said primary wavelength due to excited-state absorption to achieve lasing operation in said second laser means.

3. The apparatus of claim 1, wherein said second lasant material comprises a rare earth-doped glass which has two opposite and parallel flat faces, one of said faces having a highly antireflective coating at said primary and secondary wavelengths, its opposite face (12b) having a highly reflective coating at said primary and secondary wavelengths, said opposite face forming part of both said first and second optical cavities.

4. The apparatus of claim 2, wherein said second lasant material comprises a rare earth-doped glass which has two opposite and parallel flat faces, one of said faces (12a) having a highly transmissive coating at said primary wavelength and highly reflective at said secondary wavelength, its opposite face (12b) having a highly transmissive coating at said secondary wavelength and highly reflective at said primary wavelength, said one face (12a) forming said third reflector of said second optical cavity which third reflector is disposed on the input side of the second lasant material, and said opposite face (12b) forming said second reflector of said first optical cavity.

5. The apparatus of claim 2, wherein said fourth reflector of said second optical cavity comprises a mirror (20) positioned outside said first optical cavity and adapted for reflecting optical radiation at said secondary wavelength.

6. The apparatus of claims 1 or 2, wherein said diode pumping means produces radiation having a wavelength in the range from 630 nm to 1600 nm, and wherein said first lasant material is selected from those materials which are capable of being pumped by radiation within such range of wavelengths.

7. The apparatus of claim 6, wherein said first lasant material comprises a plano-convex and doped crystal which is selected from the group consisting of YAG, YVO₄, and YLF.

8. The apparatus of claims 1 or 2, wherein said second lasant material comprises a rare earth-doped glass.

9. The apparatus of claim 8, wherein said rare earth-doped glass comprises from 0.01% to 15% by weight of ytterbium and from 0.01% to 1.0% by weight of a material selected from the group consisting of erbium, holmium, and thulium.

10. The apparatus of claims 1 or 2, wherein said second lasant material comprises a rare earth-doped phosphate glass etalon.

11. The apparatus of claim 10, wherein said etalon is comprised of Yb-sensitized Er-doped phosphate glass having a coating on one face which is the input face for the primary wavelength adapted for high reflectivity at said secondary wavelength and for high transmissivity at said primary wavelength, and having a coating on its opposite face adapted for high reflectivity at said primary wavelength and for high transmissivity at said secondary wavelength.

12. The apparatus of claims 1 or 2, wherein said diode pumping means generates optical pumping radiation at approximately 808 nm, wherein said primary wavelength is approximately 1064 nm, and wherein said secondary wavelength is approximately 1540 nm.

13. The apparatus of claims 1 or 2, wherein said optimum output coupling is 2% or less.

14. The apparatus of claims 1 or 2, wherein said second lasant material has a thickness which provides a partially saturated absorption at said primary wavelength which is substantially equal to the optimum output coupling for said first lasant material.

15. The apparatus of claims 1 or 2, wherein said additional element is used to achieve either Q-switching, mode locking, mode selecting, or frequency doubling.

## Patentansprüche

1. Diodengepumpte Festkörperlaservorrichtung (10), die umfaßt:
eine erste Laseranordnung, die einen ersten optischen Resonator (14a, 12b) und ein erstes laseraktives Festkörpermaterial (14), das innerhalb des ersten optischen Resonators positioniert ist, beinhaltet, wobei die erste Laseranordnung entlang eines ersten optischen Weges optische Strahlung einer ersten Wellenlänge erzeugt, wenn sie durch eine Diodenpumpanordnung (16, 15) gepumpt wird; und
eine zweite Laseranordnung, die einen zweiten optischen Resonator (14a, 12b) und ein zweites laseraktives Festkörpermaterial (12), das innerhalb des zweiten optischen Resonators positioniert ist, beinhaltet, wobei die zweite Laseranordnung entlang eines zweiten optischen Weges optische Strahlung einer zweiten Wellenlänge erzeugt, wenn sie nur durch die Strahlung erster Wellenlänge von der ersten Laseranordnung gepumpt wird,
wobei die erste und die zweite Laseranordnung so konfiguriert sind, daß der erste und der zweite optische Weg wenigstens in dem gesamten zweiten laseraktiven Material kollinear sind, so daß der erste und der zweite optische Resonator zumindest teilweise überlappen und so daß das erste laseraktive Material innerhalb des zweiten optischen Resonators positioniert ist und das zweite laseraktive Material innerhalb des ersten optischen Resonators positioniert ist,
wobei das erste laseraktive Material für die zweite Wellenlänge im wesentlichen durchlässig ist, wobei das zweite laseraktive Material als ein Auskoppler für die erste Laseranordnung wirkt und wobei das zweite laseraktive Material eine ausreichende Dicke und Zusammensetzung aufweist, um die Strahlung erster Wellenlänge zu absorbieren, um ein optimales Auskoppeln für die erste Laseranordnung zu erzielen, und wobei das erste und das zweite laseraktive Material ausreichend geringe Verluste bei der ersten und der zweiten Wellenlänge aufgrund Absorption in angeregten Zuständen aufweisen, um einen Laserbetrieb in der Laservorrichtung zu erreichen.

2. Diodengepumpte Festkörperlaservorrichtung, die umfaßt:
eine erste Laseranordnung, die einen ersten und einen zweiten Reflektor (14a, 12b), die einen ersten optischen Resonator definieren, und ein erstes laseraktives Festkörpermaterial (14), das innerhalb des ersten optischen Resonators positioniert ist, beinhaltet, wobei die erste Laseranordnung entlang eines ersten optischen Weges optische Strahlung einer ersten Wellenlänge erzeugt, wenn sie durch eine Diodenpumpanordnung (16, 15) gepumpt wird; und
eine zweite Laseranordnung, die einen dritten und einen vierten Reflektor (12a, 20), die einen zweiten optischen Resonator definieren, und ein zweites laseraktives Festkörpermaterial (12), das innerhalb des zweiten optischen Resonators positioniert ist, beinhaltet, wobei die zweite Laseranordnung entlang eines zweiten optischen Weges eine optische Strahlung einer zweiten Wellenlänge erzeugt, wenn sie nur durch die Strahlung erster Wellenlänge von der ersten Laseranordnung gepumpt wird,
wobei die erste und die zweite Laseranordnung konfiguriert sind, so daß der erste und der zweite optische Weg wenigstens innerhalb des gesamten zweiten laseraktiven Materials kollinear sind, so daß der erste und der zweite optische Resonator nur teilweise überlappen, wobei kein Reflektor eines der Resonatoren einen Reflektor des anderen Resonators bildet, und so daß das zweite laseraktive Material innerhalb des ersten optischen Resonators positioniert ist,
wobei das zweite laseraktive Material als der Auskoppler für die erste Laseranordnung wirkt, wobei das zweite laseraktive Material eine ausreichende Dicke und Zusammensetzung aufweist, um die Strahlung erster Wellenlänge zu absorbieren, um ein optimales Auskoppeln für die erste Laseranordnung zu erreichen, und wobei das zweite laseraktive Material ausreichend geringe Verluste aufgrund Absorption in angeregten Zuständen für die erste Wellenlänge aufweist, um einen Laserbetrieb in der zweiten Laseranordnung zu erzielen.

3. Vorrichtung nach Anspruch 1, bei der das zweite laseraktive Material ein mit seltenen Erdmetallen dotiertes Glas umfaßt, das zwei gegenüberliegende und parallele flache Flächen aufweist, wobei eine der Flächen eine für die erste und zweite Wellenlänge hoch antireflektierende Beschichtung aufweist, wobei ihre gegenüberliegenden Fläche (12b) eine für die erste und zweite Wellenlänge hoch reflektierende Beschichtung hat, wobei die gegenüberliegende Fläche einen Teil sowohl des ersten als auch des zweiten optischen Resonators bildet.

4. Vorrichtung nach Anspruch 2, bei der das zweite laseraktive Material ein mit seltenen Erdmetallen dotiertes Glas umfaßt, das zwei gegenüberliegende und parallele Flächen aufweist, wobei eine der Flächen (12a) eine für die erste Wellenlänge hoch durchlässige Beschichtung und eine für die zweite Wellenlänge hoch reflektierende Beschichtung aufweist, wobei ihre gegenüberliegende Fläche (12b) eine für die zweite Wellenlänge hoch durchlässige Beschichtung und eine für die erste Wellenlänge hoch reflektierende Beschichtung aufweist, wobei die eine Fläche (12a) den dritten Reflektor des zweiten optischen Resonators bildet, wobei der dritte Reflektor an der Eingangsseite des zweiten laseraktiven Materials angeordnet ist, und die gegenüberliegende Fläche (12b) den zweiten Reflektor des ersten optischen Resonators bildet.

5. Vorrichtung nach Anspruch 2, bei der der vierte Reflektor des zweiten optischen Resonators einen Spiegel (20), der außerhalb des ersten optischen Resonators angeordnet und für eine Reflexion optischer Strahlung der zweiten Wellenlänge angepaßt ist, umfaßt.

6. Vorrichtung nach Anspruch 1 oder 2, bei der die Diodenpumpanordnung eine Strahlung, die eine Wellenlänge in dem Bereich von 630 nm bis 1600 nm aufweist, erzeugt und bei der das erste laseraktive Material aus solchen Materialien ausgewählt ist, die geeignet sind, durch eine Strahlung innerhalb dieses Bereiches der Wellenlänge gepumpt zu werden.

7. Vorrichtung nach Anspruch 6, bei der das erste laseraktive Material einen plankonvexen und dotierten Kristall umfaßt, der aus der Gruppe ausgewählt ist, die aus YAG, YVO₄ und YLF besteht.

8. Vorrichtung nach Anspruch 1 oder 2, bei der das zweite laseraktive Material ein mit seltenen Erdmetallen dotiertes Glas umfaßt.

9. Vorrichtung nach Anspruch 8, bei der das mit seltenen Erdmetallen dotierte Glas zu 0,01 Gew.-% bis 15Gew.-% Ytterbium und zu 0,01 Gew.-% bis 1,0 Gew.-% ein Material umfaßt, das aus der Gruppe ausgewählt ist, die aus Erbium, Holmium und Thulium besteht.

10. Vorrichtung nach Anspruch 1 oder 2, bei der das zweite laseraktive Material ein mit seltenen Erdmetallen dotiertes Phosphatglasetalon umfaßt.

11. Vorrichtung nach Anspruch 10, bei der das Etalon aus Yb-aktiviertem, Er-dotiertem Phosphatglas besteht, das an einer Fläche, die die Eingangsfläche für die erste Wellenlänge ist, eine Beschichtung aufweist, die für eine hohe Reflektivität bei der zweiten Wellenlänge und für eine hohe Durchlässigkeit bei der ersten Wellenlänge angepaßt ist, und die an ihrer gegenüberliegenden Fläche für eine hohe Reflektivität bei der ersten Wellenlänge und für eine hohe Durchlässigkeit bei der zweiten Wellenlänge angepaßt ist.

12. Vorrichtung nach Anspruch 1 oder 2, bei der die Diodenpumpanordnung eine optische Pumpstrahlung von ungefähr 808 nm erzeugt, wobei die erste Wellenlänge ungefähr 1064 nm beträgt und wobei die zweite Wellenlänge ungefähr 1540 nm beträgt.

13. Vorrichtung nach Anspruch 1 oder 2, bei der das optimale Auskoppeln 2% oder weniger beträgt.

14. Vorrichtung nach Anspruch 1 oder 2, bei der das zweite laseraktive Material eine Dicke aufweist, die eine teilweise gesättigte Absorption bei der ersten Wellenlänge liefert, die im wesentlichen gleich dem optimalen Auskoppeln für das erste laseraktive Material ist.

15. Vorrichtung nach Anspruch 1 oder 2, bei der ein zusätzliches Element (19) verwendet wird, um sowohl Q-Switching, Modusverriegelung, Moduswahl oder Frequenzverdoppelung zu erreichen.

## Revendications

1. Dispositif laser (10) à l'état solide à pompage par une diode, comprenant :
des premiers moyens laser comprenant une première cavité optique (14a,12b) et un premier matériau à l'état solide (14) actif pour l'effet laser, situé dans ladite première cavité optique, lesdits premiers moyens laser produisant un rayonnement optique ayant une longueur d'onde primaire le long d'un premier trajet optique, lorsqu'ils sont pompés par des moyens de pompage à diodes (16,15); et
des seconds moyens laser comprenant une seconde cavité optique (14a,12b) et un second matériau à l'état solide (12) actif pour l'effet laser, situés dans ladite seconde cavité optique, lesdits seconds moyens laser produisant un rayonnement optique ayant une longueur d'onde secondaire le long d'un second trajet optique, lorsqu'ils sont pompés uniquement par ledit rayonnement ayant la longueur d'onde primaire, délivré par lesdits premiers moyens laser,
lesdits premiers et seconds moyens laser agencés de telle sorte que lesdits premier et second trajets optiques sont colinéaires au moins dans ledit second matériau actif pour l'effet laser, de sorte que lesdites première et seconde cavités optiques se chevauchent au moins partiellement, et que ledit premier matériau à effet laser est situé à l'intérieur de ladite seconde cavité optique et que ledit second matériau à effet laser est situé à l'intérieur de ladite première cavité optique,
dans lequel ledit premier matériau à effet laser est essentiellement transparent pour ladite longueur d'onde secondaire, ledit second matériau à effet laser agit en tant que coupleur de sortie pour lesdits premiers moyens laser, et ledit second matériau à effet laser possède une épaisseur et une composition suffisantes pour absorber ledit rayonnement possédant la longueur d'onde primaire pour obtenir un couplage optimum de sortie pour lesdits premiers moyens laser, et dans lequel lesdits premier et second matériaux actifs pour l'effet laser présentent des pertes suffisamment faibles pour lesdites longueurs d'onde primaire et secondaire en raison d'une absorption, à l'état excité, pour obtenir l'effet laser dans ledit appareil à laser.

2. Appareil à laser à l'état solide à pompage par une diode, comprenant :
des premiers moyens laser contenant des premier et second réflecteurs (14a,12b) définissant une première cavité optique, et un premier matériau à l'état solide (14) actif pour l'effet laser, situé à l'intérieur de ladite première cavité optique, lesdits premiers moyens laser produisant un rayonnement optique ayant une longueur d'onde primaire le long d'un premier trajet optique dans le cas du pompage par des moyens de pompage à diode (16,15); et
des seconds moyens laser comprenant des troisième et quatrième réflecteurs (12a,20) définissant un seconde cavité optique, et un second matériau à l'état solide (12) actif pour l'effet laser et situé dans ladite seconde cavité optique, lesdits seconds moyens laser produisant un rayonnement optique ayant une longueur d'onde secondaire le long d'un second trajet optique, lorsqu'ils sont pompés uniquement par ledit rayonnement possédant la longueur d'onde primaire délivrée par lesdits premiers moyens laser,
lesdits premiers et seconds moyens laser étant configurés de telle sorte que lesdits premier et second trajets optiques sont colinéaires au moins dans ledit second matériau actif pour l'effet laser, de sorte que lesdites première et seconde cavités optiques se chevauchent seulement partiellement, aucun réflecteur d'une quelconque cavité ne formant un réflecteur de l'autre cavité, et de telle sorte que ledit second matériau actif pour l'effet laser est situé à l'intérieur de ladite première cavité optique,
dans lequel ledit second matériau actif pour l'effet laser agit en tant que coupleur de sortie desdits premiers moyens laser, ledit second matériau actif pour l'effet laser possède une épaisseur et une composition suffisantes pour absorber ledit rayonnement possédant la longueur d'onde primaire pour obtenir le couplage de sortie optimum pour lesdits premiers moyens laser, et dans lequel ledit second matériau actif pour l'effet laser possède des pertes suffisamment faibles pour ladite longueur d'onde primaire en raison de l'absorption à l'état excité, pour l'obtention du fonctionnement laser dans lesdits seconds moyens laser.

3. Dispositif selon la revendication 1, dans lequel ledit second matériau actif pour l'effet laser comprend un verre dopé par une terre rare, qui comporte deux faces planes parallèles et opposées, l'une desdites faces possédant un revêtement hautement antiréfléchissant pour lesdites longueurs d'onde primaires et secondaires, tandis que sa face opposée (12b) possède un revêtement hautement réfléchissant pour lesdites longueurs d'onde primaires et secondaires ladite face opposée faisant partie à la fois desdites première et seconde cavités optiques.

4. Dispositif selon la revendication 2, dans lequel ledit second matériau actif pour l'effet laser comprend un verre dopé par une terre rare, qui possède deux faces planes parallèles et opposées, l'une desdites faces (12a) possédant un revêtement hautement transmissif pour ladite longueur d'onde primaire et hautement réfléchissant pour ladite longueur d'onde secondaire, sa face opposée (12b) possédant un revêtement hautement transmissif pour ladite longueur d'onde secondaire et hautement réfléchissant pour ladite longueur d'onde primaire, ladite première face (12a) formant ledit troisième réflecteur de ladite seconde cavité optique, lequel troisième réflecteur est disposé sur le côté intérieur du second matériau actif pour l'effet laser, et ladite face opposée (12b) formant ledit second réflecteur de ladite première cavité optique.

5. Dispositif selon la revendication 2, dans lequel ledit quatrième réflecteur de ladite seconde cavité optique comprend un miroir (20) disposé à l'extérieur de ladite première cavité optique et adapté pour réfléchir le rayonnement optique à ladite longueur d'onde secondaire.

6. Dispositif selon la revendication 1 ou 2, dans lequel lesdits moyens de pompage à diode produisent un rayonnement ayant une longueur d'onde dans la gamme de 630 nm à 1600 nm, et dans lequel ledit premier matériau actif pour l'effet laser est choisi parmi les matériaux qui peuvent être pompés par un rayonnement dans une telle gamme de longueurs d'onde.

7. Dispositif selon la revendication 6, dans lequel ledit premier matériau actif pour l'effet laser comprend un cristal plan-convexe et dopé, qui est choisi dans le groupe comprenant YAG, YVO₄ et YLF.

8. Dispositif selon la revendication 1 ou 2, dans lequel ledit second matériau actif pour l'effet laser comprend un verre dopé par une terre rare.

9. Dispositif selon la revendication 8, dans lequel ledit verre dopé par une terre rare comprend 0,01 % à 15 % en poids d'ytterbium et 0,01 à 1,0 % en poids d'un matériau choisi dans le groupe comprenant l'erbium, le holmium et le thulium.

10. Dispositif selon la revendication 1 ou 2, dans lequel ledit second matériau à effet laser comprend un étalon de verre à base de phosphate dopé par une terre rare.

11. Dispositif selon la revendication 10, dans lequel ledit étalon est constitué par un verre formé de phosphate sensibilisé au Yb et dopé avec du Er et contenant, sur une face qui est la face d'entrée pour la longueur d'onde primaire, un revêtement adapté pour présenter une réflectivité élevée pour ladite longueur d'onde secondaire et une transmittivité élevée pour ladite longueur d'onde primaire, et comportant, sur sa face opposée, un revêtement adapté pour fournir une réflectivité élevée pour ladite longueur d'onde primaire et une transmissivité élevée pour ladite longueur d'onde secondaire.

12. Dispositif selon la revendication 1 ou 2, dans lequel lesdits moyens de pompage à diode produisent un rayonnement de pompage optique à environ 808 nm, ladite longueur d'onde primaire étant égale approximativement à 1064 nm et ladite longueur d'onde secondaire étant égale approximativement à 1540 nm.

13. Dispositif selon la revendication 1 ou 2, dans lequel ledit couplage de sortie optimum est égal à 2 % ou moins.

14. Dispositif selon la revendication 1 ou 2, dans lequel ledit second matériau actif pour l'effet laser possède une épaisseur qui fournit une absorption partiellement saturée pour ladite longueur d'onde primaire, qui est sensiblement égale au couplage de sortie optimum pour ledit premier matériau actif pour l'effet laser.

15. Dispositif selon la revendication 1 ou 2, dans lequel ledit élément additionnel est utilisé pour obtenir une commutation de Q, un blocage de mode, une sélection de mode ou un doublement de fréquence.
